# EUROPÄISCHE PATENTANMELDUNG

(11) **EP 3 584 380 A1**
(43) Veröffentlichungstag der Anmeldung: **25.12.2019**
(21) Anmeldenummer: 19180459.0
(22) Anmeldetag: 17.06.2019
(51) Int. Cl.: E04B 1/62, C08J 5/18, E06B 1/62, C08L 75/04, E04B 1/68, C08G 101/00

(54) **FOLIENEINRICHTUNG, INSBESONDERE FASSADENFOLIE**

(30) Priorität: 20.06.2018 DE 102018114770
(71) Anmelder: tremco illbruck GmbH, 92439 Bodenwöhr (DE)
(72) Erfinder: Windl, Hans-Jürgen, 92439 Bodenwöhr (DE); Komma, Markus, 93133 Burglengenfeld (DE); Deml, Beatrix, 92439 Bodenwöhr (DE)
(74) Vertreter: Bittner, Bernhard

(57) **Zusammenfassung**

Folieneinrichtung (1) zum Abdichten von Fassaden, Fenstern und Außentüren gegenüber Bauwerken, mit einem Schaumstoff. Erfindungsgemäß ist der Schaumstoff (4) ein aufgeschäumter Schaumstoff und insbesondere eine aufgeschäumte Folie enthaltend Polyurethan ist.

## Beschreibung

Die vorliegende Erfindung bezieht sich auf eine Abdichtfolie und insbesondere eine Fassadenfolie. Aus dem Stand der Technik ist es bekannt, dass viele Anschlüsse beispielsweise von Fassaden, Fenstern, Außentüren an den Rohbau mit Folien abgedichtet werden. Diese werden an der Fassadenaußenseite und am Rohbau insbesondere mittels pastösem oder flüssigem Kleber oder auch geeigneten Selbstklebungen fixiert.

Aus dem Stand der Technik ist es dabei bekannt, EPDM (Ethylen-Propylen-Dien-Kautschuk) -Folien zu verwenden. Daneben ist es auch bekannt, diffusionsoffene und feuchtevariable Folien zu verwenden. Der Vorteil in der Verwendung von EPDM liegt in dessen sehr hoher Elastizität. Weiterhin ist dieses Material nahezu unbegrenzt UV-beständig. Während die UV-Beständigkeit oft nur vorrübergehend notwendig ist, insbesondere bis ein derart abgedichteter Bauanschluss mittels Blech/Keramik/Naturstein/Dämmung oder ähnlichem überdeckt wird ist die Elastizität eine oft sehr wichtige Eigenschaft.

Fassadenbauteile haben, im Unterschied zu Fenstern sehr viel größere äußere Abmessungen, wodurch wesentlich mehr Bewegungen zwischen dem Rohbau und der Fassade auftreten. In diesem Falle wirkt die Elastizität spannungsausgleichend und vermeidet eine Überbeanspruchung der Klebeflächen bei kritischen Zugbelastungen.

Aus dem Stand der Technik bekannte Folien (vorwiegend wdd-variable) werden zwar immer häufiger eingesetzt, diese sind jedoch diesbezüglich aufgrund begrenzter Dehnfähigkeit nur bedingt geeignet. Andererseits haben diese Folien den großen Vorteil, Bauteilfeuchte, die beim Einbau eingeschlossen wird, sehr gut austrocknen zu lassen. Wie erwähnt ist jedoch nachteilig die fehlende Dehnfähigkeit und auch die nur eingeschränkte UV-Beständigkeit (beispielsweise ca. ein Jahr bei freier Bewitterung). Der Vorteil der Austrocknung ergibt sich andererseits durch äußerst niedrige SD(Sd) -Werte, wenn sie mit Feuchtigkeit in Berührung kommt. Dieser Vorteil ist nicht zu unterschätzen. Aufgrund dessen ist in dem vom Verband der Fenster- und Fassadenhersteller ausgestellten Leitfaden zur Montage von hinterlüfteten Fassaden eine neue Forderung erhoben worden.

In dieser Forderung heißt es, dass im Außenbereich diffusionsoffene Folien eingesetzt werden sollen. Dies bedeutet, dass zunehmend mehr Wert auf ein Austrocknen von Bauteilen gelegt wird, um die volle Dämmung nutzbar zu machen. Dies beruht darauf, dass trockene Dämmmaterialien besser dämmen.

EPDM hat im Vergleich zu aus dem Stand der Technik bekannten Bändern einen SD-Wert von ca. 38 m bei 0,7 mm Schichtdicke und von ca. 19 m bei 0,6 mm Schichtdicke. Beides wäre laut Definition in der DIN 4108 als dampfbremsend zu bezeichnen. Erst Werte unter 0,5 m gelten laut dieser Definition als diffusionsoffen.

Der vorliegenden Erfindung liegt daher die Aufgabe zugrunde, eine Dichtfolie oder ein Abdichtmaterial zur Verfügung zu stellen, welches die oben erwähnten Eigenschaften vereint, insbesondere eine hohe Dehnfähigkeit mit einem geringen Diffusionswiderstand. Mit anderen Worten müssen auch im Stand der Technik zusätzliche Maßnahmen getroffen werden, um Feuchtigkeit aus den Anschlüssen nach außen entweichen zu lassen.

So ist es beispielsweise aus dem internen Stand der Technik der Anmelderin bekannt, Luftschlitze vorzusehen. Daneben ist es auch aus dem internen Stand der Technik der Anmelderin bekannt, Mikroöffnungen in EPDM-Folien vorzusehen. Diese Maßnahmen wiederum haben den Nachteil, dass die damit erreichbare Dichtigkeit erheblich verloren geht oder dass der Arbeitsaufwand größer wird (beispielsweise beim Anordnen von Luftschlitzen).

Weiterhin ist es bekannt, dass Folien so verklebt werden, dass sie von der Fassadenaußenkante bis in den Innenraum (beispielsweise eine Fensterlaibung des Baus) geführt werden.

Dann oder wenn sie in dem an der Wand verklebten Bereich mit einem Dämmsystem überdeckt werden, müssen Putze und mineralische Dämmstoffkleber auf der Oberfläche haften. Aus dem Stand der Technik bekannte Dichtbänder weisen eine solche Haftung auf. EPDM-Folien muss man allerdings, um derartige Eigenschaften zu erhalten, mit einem Vlies beschichten, in dem sich Putz oder Kleber verkrallen können. Dies macht den Werkstoff EPDM relativ teuer.

Weiterhin lässt sich EPDM nicht zu 100 % zuverlässig mit lösungsmittelfreien Klebern verkleben. Folienkleber, wie aus dem Stand der Technik bekannte Kleber, führen teilweise zu Ausfällen bei der Haftung an der Folie. Dies trifft auf Produkte unterschiedlichster Hersteller zu. Da man allerdings im Bereich der Bauchemie zu besonders emissionsarmen Produkten tendiert, sind auch nahezu alle Anbieter auf der Suche nach derartigen Klebern für EPDM-Folien.

Bisher war diese Suche nicht erfolgreich. Zusammengefasst sollten durch die Dichtfolie folgende Merkmale erreicht werden, nämlich einerseits eine hohe Elastizität, eine hohe Witterungs- und UV-Beständigkeit, eine Diffusionsoffenheit, eine Verklebbarkeit mit besonders emissionsarmen Klebern und eine Überputzbarkeit.

Die vorliegenden Aufgaben werden durch den Gegenstand des unabhängigen Patentanspruchs erreicht. Vorteilhafte Ausführungsformen und Weiterbildungen sind Gegenstand der Unteransprüche. Es wird jedoch darauf hingewiesen, dass nicht zwangsweise alle Vorteile durch sämtliche der Ausgestaltungen erreicht werden.

Eine erfindungsgemäße Folieneinrichtung und insbesondere eine Folieneinrichtung zum Abdichten von Fassaden, Fenster, Außentüren gegenüber Bauwerken weist einen Schaumstoff auf. Erfindungsgemäß handelt es sich bei dem Schaumstoff um einen Schaumstoff enthaltend Polyurethan und insbesondere um eine aufgeschäumte Folie enthaltend Polyurethan. Insbesondere handelt es sich bei dem Schaumstoff um eine aufgeschäumte Folie enthaltend TPU. Bevorzugt handelt es sich um eine aufgeschäumte Polyurethanfolie.

Es wird daher ein im Stand der Technik neuartiger Werkstoff für diesen Zweck vorgeschlagen. Polyurethanschaumstoffe sind an sich aus dem Stand der Technik bekannt. Im Rahmen der vorliegenden Erfindung, insbesondere einer speziellen Ausführungsform der Erfindung wird jedoch vorgeschlagen, den Schaumstoff in einer speziellen Aufschäumung zur Verfügung zu stellen. In einer bevorzugten Ausführungsform ist der Schaumstoff derart aufgeschäumt, dass er eine Dichte aufweist, die größer ist als 0,2 g/cm³, bevorzugt größer als 0,3 g/cm³, bevorzugt größer als 0,4 g/cm³, bevorzugt größer als 0,5 g/cm³ und besonders bevorzugt größer als 0,6 g/cm³.

Bei einer weiteren vorteilhaften Ausführungsform ist der Schaumstoff derart aufgeschäumt, dass er eine Dichte aufweist, die kleiner ist als 1,0 g/cm³, bevorzugt kleiner als 0,9 g/cm³, bevorzugt kleiner als 0,8 g/cm³ und besonders bevorzugt kleiner als 0,7 g/cm³.

Bevorzugt werden die oben genannnten Dichten durch einen Aufschäumvorgang erreicht. Besonders bevorzugt werden die Dichten durch Aufschäumen eines Ausgangssschaumstoffes erreicht, der eine Dichte aufweist, die größer ist als 0,8 g/cm³ bevorzugt größer als 0,9 g/cm³ bevorzugt größer als 1,0 g/cm³ und bevorzugt größer als 1,1 g/cm³.

Besonders bevorzugt werden die Dichten durch Aufschäumen eines Ausgangssschaumstoffes erreicht, der eine Dichte aufweist, die kleiner ist als 2,0 g/cm³ bevorzugt kleiner als 1,5 g/cm³ bevorzugt kleiner als 1,3 g/cm³ und bevorzugt kleiner als 1,2 g/cm³.

Das Polyurethanmaterial weist damit in einem Ausgangszustand, das heißt bei Vorliegen einer normalen und nicht aufgeschäumten Folie eine Dichte in einem Bereich von 1,1 bis 1,2 g/cm³ auf. Bevorzugt liegt das Ausgangsmaterial daher in Form einer Folie vor. Damit ist bevorzugt ein Ausgangsprodukt des hier beschriebenen Verfahrens eine nicht aufgeschäumte Folie. Diese Folie wird einem Aufschäumprozess unterworfen, der zum verwendungsfähigen Produkt führt.

Durch das Aufschäumen des Materials wird eine Reduzierung der Dichte erreicht. Insbesondere der oben genannte Bereich von 0,6 bis 0,7 g/cm³ führt zu einer Reihe von neuen nicht erwarteten Eigenschaften, insbesondere für die hier beschriebene Anwendung zur Fassadenabdichtung. Ein derartiger Schaumstoff weist eine überraschend hohe Elastizität auf, insbesondere eine Bruchdehnung von bis zu 700 %. Dabei erfolgt eine entsprechende Messung bevorzugt nach EN 12311 - 2, Prüfkörperform "Knochen".

Daneben ist auch nur ein geringer Kraftaufwand erforderlich, um die entsprechende Dehnung zu erreichen. Auf diese Weise kann eine Entlastung der jeweiligen beteiligten Klebeflächen erreicht werden. Daneben kann mit diesem Schaumstoff das Kriterium der Diffusionsoffenheit erfüllt werden, es ergibt sich ein SD-Wert von ca. 0,5 m. Daneben ist der besagte Schaumstoff auch mit bestimmten Standardklebern verwendbar, insbesondere jedoch kann dieser Schaumstoff auch mit diversen emissionsarmen Klebern verklebt werden.

Ein weiterer Vorteil des hier beschriebenen Schaumstoffs ist die Überputzbarkeit. Die Haftwerte liegen dabei weit über den Vorgaben gemäß der Richtlinie für Putzer und Stuckateure zum Überputzen von Fensteranschlussfugen. Daneben weist der hier beschriebene Schaumstoff auch eine hohe UV- und Witterungsbeständigkeit auf.

Bei einer weiteren vorteilhaften Ausführungsform weist der Schaumstoff eine Dicke auf, die größer ist als 0,1 mm, bevorzugt größer als 0,2 mm, bevorzugt größer als 0,3 mm und bevorzugt größer als 0,4 mm und besonders bevorzugt größer als 0,5 mm. Bei einer weiteren bevorzugten Ausführungsform ist die Dicke geringer als 1,6 mm, bevorzugt geringer als 1,3 mm, bevorzugt geringer als 0,9 mm, bevorzugt geringer als 0,8 mm und besonders bevorzugt geringer als 0,7 mm.

Bei einer weiteren vorteilhaften Ausführungsform weist die Dichtungseinrichtung eine Breite auf, die größer ist als 40 mm, bevorzugt größer als 50 mm, bevorzugt größer als 60 mm. Bei einer weiteren bevorzugten Ausführungsform weist die Folieneinrichtung eine Breite auf, die geringer ist als 1000 mm, bevorzugt geringer als 700 mm, bevorzugt geringer als 600 mm, bevorzugt geringer als 500 mm.

Es hat sich herausgestellt, dass ein entsprechend aufgeschäumter Schaumstoff in den angegebenen Dicken einerseits die Vorgaben einer hohen Elastizität aufweist und andererseits auch als diffusionsoffen bezeichnet werden kann, insbesondere einen SD-Wert von 0,5 m oder darunter aufweist.

Bei einer weiteren vorteilhaften Ausführungsform ist die Folieneinrichtung als Folienrolle konfektioniert. Dies bedeutet, dass im Rahmen der Herstellung der Schaumstoff insbesondere auf einer Rolle aufgewickelt wird. Bei einer bevorzugten Ausführungsform weist diese Rolle einen Rollenkern bzw. Wickelkern auf, auf welchen die Rolle aufgewickelt ist.

Bei einer weiteren vorteilhaften Ausführungsform weist die Folieneinrichtung gegenüber Außenputz einen Putzabzugswert von mehr als 2 N/cm², bevorzugt von mehr als 4 N/cm² und besonders bevorzugt von mehr als 6 N/cm² auf.

Bei einer weiteren vorteilhaften Ausführungsform weist die Folieneinrichtung gegenüber Innenputz einen Putzabzugswert von mehr als 8 N/cm², bevorzugt von mehr als 12 N/cm², bevorzugt von mehr als 18 N/cm² und besonders bevorzugt von mehr als 24 N/cm² auf.

Bei einer weiteren vorteilhaften Ausführungsform weist die Folieneinrichtung eine Dehnbarkeit von mehr als 200 %, bevorzugt von mehr als 300 %, bevorzugt von mehr als 400 % und besonders bevorzugt von mehr als 500 % auf. Diese Dehnbarkeiten sind insbesondere für alle gewünschten Anforderungen im Bereich der Abdichtung von Fassaden ausreichend.

Bei einer weiteren bevorzugten Ausführungsform ist die Folieneinrichtung als wenigstens erster Dichtstreifen ausgeführt. Bei einer weiteren vorteilhaften Ausführungsform weist der Dichtstreifen an wenigstens einer Oberfläche eine Klebeschicht bzw. klebende Beschichtung auf. So kann beispielsweise auf diese Oberfläche ein Klebstoff aufgetragen sein. Auch kann auf dieser Oberfläche ein Klebeband und insbesondere ein doppelseitiges Klebeband insbesondere mit Liner aufgetragen sein.

Bei einer weiteren vorteilhaften Ausführungsform erstreckt sich die Klebeschicht nur entlang eines Teils der Breite der Folieneinrichtung. Bevorzugt erstreckt sich die Klebeschicht nur entlang höchstens 70 % der Breite der Dichtungseinrichtung. Bei einer weiteren bevorzugten Ausführungsform ist die Klebeschicht in Form eines Klebestreifens ausgebildet, der sich entlang eines Teils der Breite der Dichtungseinrichtung erstreckt.

Bevorzugt weist die Klebeschicht einen ersten Klebestreifen sowie einen zweiten Klebestreifen auf, die in der Breitenrichtung der Dichtungseinrichtung beabstandet voneinander angeordnet ist. Bevorzugt verlaufen diese Klebestreifen parallel zueinander. Bei einer weiteren bevorzugten Ausführungsform ist wenigstens einer der beiden Klebestreifen endseitig in der Breitenrichtung der Dichtungseinrichtung an diesem angeordnet.

Besonders bevorzugt sind beide Klebestreifen in der Breitenrichtung der Dichtungseinrichtung endseitig an der Dichtungseinrichtung angeordnet.
Bei einer weiteren bevorzugten Ausführungsform ist an der Klebeschicht eine Abdeckeinrichtung angeordnet, welche diese Klebeschicht wenigstens teilweise und bevorzugt vollständig bedeckt.

Bei einer weiteren vorteilhaften Ausführungsform ist die Klebeschicht als Klebestreifen ausgebildet, bzw. weist einen ersten Klebestreifen auf, der in einem in der Breitenrichtung betrachteten Endabschnitt der Dichtungseinrichtung angeordnet ist

Die vorliegende Erfindung ist weiterhin auf die Verwendung eines aufgeschäumten Polyurethanschaumstoffbandes zur Abdichtung von Fassaden, Fenstern und/oder dergleichen gerichtet. Vorteilhaft ist dieses Abdichtband in der oben dargestellten Weise ausgestattet. Insbesondere weist der Schaumstoff dieses Bandes eine Dichte der oben genannten Art auf.

Bei der hier vorgeschlagenen Verwendung wird auch dem Umstand Rechnung getragen, dass es nunmehr gewünscht ist, dass derartige dampfbremsende oder -dichte Abdichtfolien Öffnungen zum Außenklima aufweisen sollen. Dies bedeutet, dass im Gegensatz zu früheren Ansätzen nunmehr keine Dampfdichtheit mehr gefordert wird. Die hier oben beschriebene Folie weist den Vorteil auf, dass sie im Gegensatz zu Folien aus dem Stand der Technik diffusionsoffen ist.

Wie oben erwähnt, ist die hier beschriebene Folie bevorzugt auch deutlich dehnbarer als aus dem Stand der Technik eingesetzte Folien. So erlaubt sie einerseits eine Dehnung bis nahezu 600 %. Auch ist die Kraft, die zur Dehnung nötig ist, deutlich geringer als im Stand der Technik. Bei EPDM-Folien steigt die Kraft bis hin zum Reißen der Folie auf über 60 N an, wohingegen die Kraft zum Dehnen bei der hier beschriebenen Folie auch bis zum Reißen bevorzugt bei unter 60 N bleibt. Auf diese Weise wird der Gefahr des Abreißens der geklebten Befestigung am Baukörper und am Bauelement entgegengewirkt und auch die Klebeflächen werden wie oben erwähnt weniger belastet.

Weiterhin ist bevorzugt die Folieneinrichtung auch in einem vollflächig verklebten Bereich überputzbar.

Die vorliegende Erfindung ist weiterhin auf ein Bauwerk mit wenigstens einer Fassadeneinrichtung gerichtet. Dabei ist diese Fassadeneinrichtung gegenüber einem Baukörper des Bauwerks und insbesondere einem Mauerwerk des Bauwerks mit einer Dichtungseinrichtung der oben beschriebenen Art angeordnet und insbesondere abgedichtet.

Die vorliegende Erfindung bezieht sich weiterhin auf ein Verfahren zur Abdichtung von Fassaden gegenüber Bauwerken, wobei eine Schaumstofffolie enthaltend Polyurethan und insbesondere aus TPU zur Verfügung gestellt wird.

Bevorzugt weist der Schaumstoff (die Folie) vor dem Aufschäumen eine Dichte auf, die größer ist als 0,8 g/cm³ bevorzugt größer als 0,9 g/cm³ bevorzugt größer als 1,0 g/cm³ und bevorzugt größer als 1,1 g/cm³.

Bevorzugt weist der Schaumstoff (die Folie) vor dem Aufschäumen eine Dichte auf, die kleiner ist als 2,0 g/cm³ bevorzugt kleiner als 1,5 g/cm³ bevorzugt kleiner als 1,3 g/cm³ und bevorzugt kleiner als 1,2 g/cm³.

Bevorzugt weist die Schaumstofffolie nach dem Aufschäumen eine Dichte auf, die größer ist als 0,2 g/cm³, bevorzugt größer als 0,3 g/cm³, bevorzugt größer als 0,4 g/cm³, bevorzugt größer als 0,5 g/cm³ und besonders bevorzugt größer als 0,6 g/cm³.

Bevorzugt weist die Schaumstofffolie nach dem Aufschäumen eine Dichte auf, die kleiner ist als 2,0 g/cm³ bevorzugt kleiner als 1,5 g/cm³ bevorzugt kleiner als 1,3 g/cm³ und bevorzugt kleiner als 1,2 g/cm³.

Bevorzugt wird der Schaumstofffolie nach dem Aufschäumen als Schaumstoffrolle konfektioniert. Auf diese Weise kann der Schaumstoff in einer handlicheren Weise zur Verfügung gestellt werden.

Bei einer weiteren bevorzugten Ausführungsform wird der Schaumstoff an wenigstens einer Oberfläche mit einer Klebeschicht und/oder einem Klebeband ausgestattet.

Weitere Vorteile und Ausführungsformen ergeben sich aus den beigefügten Figuren. Darin zeigen:
- Fig. 1: eine Frontansicht eines Bauwerks;
- Fig. 2: eine Ansicht entlang der Linie A - A auf dem in Fig. 1 mit I gekennzeichneten Bereich des Bauwerks;
- Fig. 3: eine Ansicht entlang der Linie A - A auf den in Fig. 1 mit II gekennzeichneten Bereich des Bauwerks;
- Fig. 4: eine Darstellung einer Dichtfolie in einer ersten Ausführungsform; und
- Fig. 5: eine Darstellung einer Dichtfolie in einer zweiten Ausführungsform.

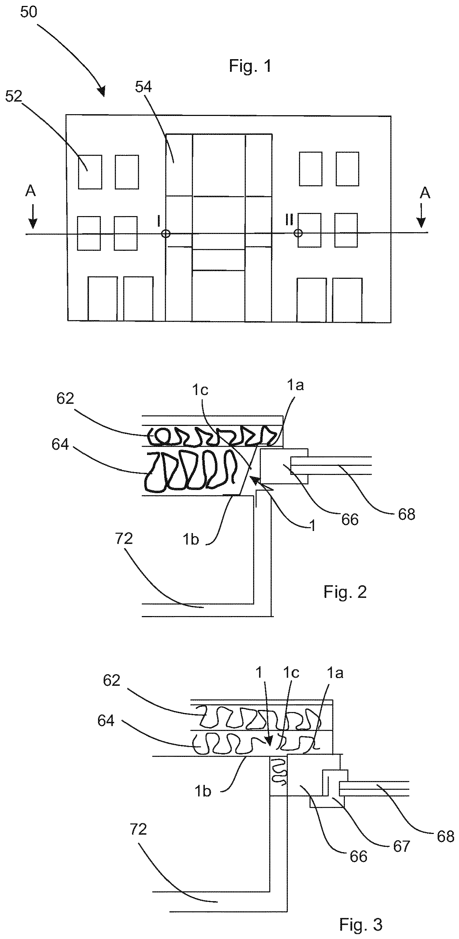

Fig.1 zeigt eine schematische Darstellung eines Bauwerks 50, insbesondere einer Frontfassade dieses Bauwerks. Dieses Bauwerk weist dabei eine Vielzahl von Fenstern 52 auf. Das Bezugszeichen 54 kennzeichnet einen weiteren Fassadenbereich, in dem beispielsweise eine Vielzahl von Fenstern und/oder Türen angeordnet sein können.

Eine erfindungsgemäße Dichtfolie kann zum Abdichten der einzelnen Fenster bzw. Fensterfassaden oder des Fassadenbereichs gegenüber einem Mauerwerk zum Einsatz kommen.

Fig. 2 zeigt eine Ansicht des Mauerwerks und der daran angeordneten Fassade in dem in Fig. 1 dargestellten Bereich I und bei Betrachtung von oben auf die Linie A-A. Dabei bezieht sich das Bezugszeichen 1 auf eine erfindungsgemäße Dichtfolie bzw. Fassadenfolie. Insbesondere ist dabei eine äußere Anwendung der Dichtfolie bzw. Fassadenfolie gezeigt.

Das Bezugszeichen 68 kennzeichnet ein Fensterglas und das Bezugszeichen 66 einen Fensterrahmen. Das Bezugszeichen 72 kennzeichnet eine Wand, beispielsweise eine Betonwand, an der die Dämmstoffe 64 und 62 angeordnet sind. Als Beispiel sind hier 2 Lagen Dämmstoff angeordnet. Der Fensterrahmen 66 ist am Baukörper 72 angeordnet und auch an diesem befestigt.

Die Dichtfolie bzw. Folieneinrichtung 1 ist hier insbesondere zwischen dem Putzabschnitt 64 und dem Fensterrahmen 66 angeordnet und dichtet diesen Bereich ab. So kann die Dichtfolie Endabschnitte 1a und 1b aufweisen, wobei bevorzugt der erste Endabschnitt 1a der Dichtfolie an der Wand 72 angeklebt sein kann und der zweite Endabschnitt 1b der Dichtfolie an dem Rahmen 66.

Zwischen diesen Endabschnitten 1a und 1b kann sich ein Bereich 1c der Dichtfolie erstrecken, der nicht mit einem klebenden Material versehen ist. Bei der in Fig. 1 gezeigten Situation kann die Dichtfolie schräg verlaufen und sich hier von links nach rechts und auch bezüglich des Gebäudes nach außen erstrecken.

Fig. 2 zeigt eine Ansicht des Mauerwerks und der daran angeordneten Fassade in dem in Fig. 1 dargestellten Bereich II. Dabei bezieht sich das Bezugszeichen 1 auf eine erfindungsgemäße Dichtfolie bzw. Fassadenfolie. Insbesondere ist dabei eine äußere (raumaußenseitige) Anwendung der Dichtfolie bzw. Fassadenfolie gezeigt.

Bei der in Fig. 3 gezeigten Ausführungsform verläuft die Dichtfolie im Wesentlichen waagrecht und deckt einen Endbereich der Wand 72 an, an den sich eine Rahmen 66 mit Flügel 67 und Glas 68 anschließt. Daneben sind auch hier wieder die Putzabschnitte 62 und 64 vorgesehen.

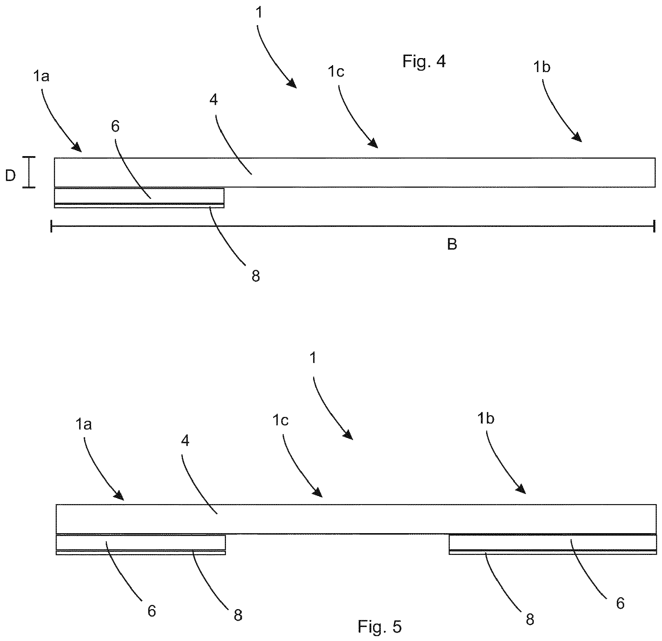

Fig. 4 zeigt eine erste Ausführungsform einer erfindungsgemäßen Dichtungseinrichtung bzw. Dichtfolie 1. Eine Längsrichtung bzw. Erstreckungsrichtung der Folie würde hier senkrecht zur Figurenebene verlaufen. Das Bezugszeichen B bezieht sich auf eine Breitenrichtung der Dichtungseinrichtung und das Bezugszeichen D auf eine Dickenrichtung.

Das Bezugszeichen 4 kennzeichnet den Schaumstoffkörper der Dichtungseinrichtung, bei dem es sich, wie oben gesagt um einen aufgeschäumten Körper aus Polyurethan handelt. Die Bezugszeichen 1a und 1b kennzeichnen Endabschnitte der Dichtungseinrichtung, betrachtet in der Breitenrichtung B. Das Bezugszeichen 1c kennzeichnet einen mittleren Abschnitt der Dichtungseinrichtung.

In dem ersten Endabschnitt 1a ist an dem Schaumstoff 4, genauer einer Oberfläche des Schaumstoffs eine Klebeschicht 6 angeordnet, hier in Form eines Klebestreifens 6. AN diesem Klebestreifen 6 wiederrum ist ein Abdeckelement 8, auch als Liner bezeichnet, angeordnet.

Dieser Klebestreifen 6 hat bevorzugt eine Breite, welche größer ist als 6 mm, bevorzugt größer als 10 mm, besonders bevorzugt größer als 14 mm. Bevorzugt hat der Klebestreifen 6 eine Breite, die geringer ist als 150 mm, bevorzugt geringer als 100mm, bevorzugt geringer als 70 mm und besonders bevorzugt 30 mm.

Die in Fig. 4 gezeigte Folieneinrichtung eignet sich insbesondere zur Befestigung an einem Fenster oder einem Fassadenprofil insbesondere mittels SK (Selbstklebe)-Streifen.

Bei der in Fig. 5 gezeigten Ausführungsform sind an dem Schaumstoff 4 zwei Klebestreifen 6, jeweils endseitig in Breitenrichtung angeordnet. Auch an diesen Klebestreifen 6 ist wieder ein Abdeckelement 8 angeordnet. Der linke Endabschnitt 1a ist dabei bevorzugt zur Befestigung an einem Fenster oder Fassadenprofil geeignet und bestimmt. Der rechte Endabschnitt 1b ist bevorzugt zur Befestigung an einem Baukörper geeignet und bestimmt. Die beiden in der Anwendung unterschiedlichen Endabschnitte können in Qualität und Breite auch unterschiedlich ausgeführt sein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Dichtungseinrichtung
- 1a,b: Endabschnitte
- 1c: mittlerer Abschnitt
- 4: Schaumstoff(körper)
- 6: Klebeschicht, Klebestreifen
- 8: Abdeckelement
- 50: Bauwerk
- 52: Fenster
- 54: Fassadeneinrichtung
- 62, 64: 2 Dämmungen
- 66: Fensterrahmen
- 67: Fensterflügel
- 68: Fensterglas
- 72: Betonmauer

- B: Breitenrichtung
- D: Dickenrichtung

## Patentansprüche

1. Folieneinrichtung (1) zum Abdichten von Fassaden, Fenstern und Außentüren gegenüber Bauwerken, mit einem Schaumstoff,
**dadurch gekennzeichnet, dass**
der Schaumstoff (4) ein aufgeschäumter Schaumstoff und insbesondere eine aufgeschäumte Folie enthaltend Polyurethan ist.

2. Folieneinrichtung (1) nach Anspruch 1,
**dadurch gekennzeichnet, dass**
der Schaumstoff (4) derart aufgeschäumt ist, dass er eine Dichte aufweist, die größer ist als 0,2 g/cm³, bevorzugt größer als 0,3 g/cm³, bevorzugt größer als 0,4 g/cm³, bevorzugt größer als 0,5 g/cm³, und besonders bevorzugt größer als 0,7 g/cm³.

3. Folieneinrichtung (1) nach Anspruch 1,
**dadurch gekennzeichnet, dass**
der Schaumstoff (4) derart aufgeschäumt ist, dass er eine Dichte aufweist, die kleiner ist als 1,0 g/cm³, bevorzugt kleiner als 0,9 g/cm³, bevorzugt kleiner als 0,8 g/cm³ und besonders bevorzugt größer als 0,7g/cm³.

4. Folieneinrichtung (1) nach wenigstens einem der vorangegangenen Ansprüche, **dadurch gekennzeichnet, dass**
der Schaumstoff (4) ein Dicke (d) aufweist, die größer ist als 0,1 mm, bevorzugt größer als 0,2 mm, bevorzugt größer als 0,3 mm, bevorzugt größer als 0,4 mm und besonders bevorzugt größer als 0,5 mm und/oder dass der Schaumstoff eine Dicke aufweist, die kleiner ist als 1,6 mm, bevorzugt kleiner als 1,3 mm, bevorzugt kleiner als 1,0 mm, bevorzugt kleiner als 0,9 mm, bevorzugt kleiner als 0,8 mm, bevorzugt kleiner als 0,7 mm.

5. Folieneinrichtung (1) nach wenigstens einem der vorangegangenen Ansprüche, **dadurch gekennzeichnet, dass**
die Folieneinrichtung (1) als Folienrolle konfektioniert ist.

6. Folieneinrichtung (1) nach wenigstens einem der vorangegangenen Ansprüche, **dadurch gekennzeichnet, dass**
die Folieneinrichtung (1) gegenüber Außenputz einen Putzabzugswert von mehr als 2N/cm², bevorzugt von mehr als 4 N/cm², bevorzugt von mehr als 6 N/cm² aufweist.

7. Folieneinrichtung (1) nach wenigstens einem der vorangegangenen Ansprüche, **dadurch gekennzeichnet, dass**
die Folieneinrichtung (1) gegenüber Innenputz einen Putzabzugswert von mehr als 8 N/cm², bevorzugt von mehr als 12 N/cm², bevorzugt von mehr als 18 N/cm² und besonders bevorzugt von mehr als 24 N/cm² aufweist.

8. Folieneinrichtung (1) nach wenigstens einem der vorangegangenen Ansprüche, **dadurch gekennzeichnet, dass**
die Folieneinrichtung (1) eine Dehnbarkeit von mehr als 200 %, bevorzugt von mehr als 300 %, bevorzugt von mehr als 400 % und besonders bevorzugt von mehr als 500 % aufweist.

9. Bauwerk (50) mit wenigstens einer Fassadeneinrichtung (52, 54),
**dadurch gekennzeichnet, dass**
diese Fassadeneinrichtung (52, 54) gegenüber einem Baukörper des Bauwerks und insbesondere einem Mauerwerk (72) des Bauwerks mit einer Dichtungseinrichtung (1) nach wenigstens einem der vorangegangenen Ansprüche angeordnet und insbesondere abgedichtet ist.

10. Verwendung einer Folieneinrichtung (1) nach wenigstens einem der vorangegangenen Ansprüche zum Abdichten von Fenster, Fassaden und dergleichen gegenüber Baukörpern von Bauwerken.

11. Verfahren zum Herstellen einer Folieneinrichtung (1) zum Abdichten von Fassaden gegenüber Bauwerken, wobei eine Polyurethan enthaltende Folie und insbesondere eine TPU-Folie aufgeschäumt wird.
